# EUROPÄISCHE PATENTANMELDUNG

(11) **EP 4 850 834 A1**
(43) Veröffentlichungstag der Anmeldung: **09.12.2026**
(21) Anmeldenummer: 25180967.9
(22) Anmeldetag: 05.06.2025
(51) Int. Cl.: B23B 47/00, B23B 51/00, B23Q 11/00, B28D 7/02

(54) **SYSTEM ZUM SAUGBOHREN**

(71) Anmelder: Hilti Corporation, 9494 Schaan (LI)
(72) Erfinder: Szalai, Tibor, 6000 Kecskemét (HU); Szabó, József, 06618 Schönburg (DE); Palásti, Bence, 6066 Tiszaalpár (HU)
(74) Vertreter: Hilti Aktiengesellschaft Corporate Intellectual Property

(57) **Zusammenfassung**

System zum Saugbohren, umfassen einen Saugbohrer (10), eine Absaughülse (20) und einen Absaugadapter (18). Der Saugbohrer (10) ist zum Bohren von Gestein ausgebildet, umfassend einen Schaft (12), einen Bohrkopf (14) und ein Einsteckende (16), wobei entlang des Bohrkopfs (14) und entlang des Schafts (12) wenigstens jeweils eine Nute zur Ausbildung eines Absaugkanals (38) ausgebildet ist, wobei die Nuten im Bohrkopf (14) sowie im Schaft (12) zumindest teilweise durch wenigstens ein Deckelement (24) bedeckt sind. Das Deckelement (24) bildet am Schaft (12) einen Kanalausgang (60) aus, der Zugang zu dem wenigstens einen Absaugkanal (38) bildet. Die Absaughülse (20) deckt den Kanalausgang (60) partiell ab und weist eine Verbindungsöffnung (40) auf, die mit dem Kanalausgang (60) kommuniziert. Der Absaugadapter (18) weist einen Hohlraum auf, der als innenliegenden Sammelraum (42) ausgebildet ist und einen Abführkanal (66) ausbildet. Der Absaugadapter (18) ist an der Absaughülse (28) angeordnet, wobei der Absaugadapter (18) die Absaughülse (20) zumindest partiell umgreift und die Verbindungsöffnung (40) mit den innenliegenden Sammelraum (42) kommuniziert, so dass der innenliegende Sammelraum (42) fluidisch mit dem wenigstens einen Absaugkanal (38) in Verbindung steht. Das System ermöglicht ein effizientes und komfortables Bohren in Gestein.

## Beschreibung

Die Erfindung geht aus von einem Saugbohrer zum Bohren von Gestein. Der Saugbohrer umfasst einen Schaft, einen mit dem Schaft verbundenen Bohrkopf und ein Einsteckende.

Aus der DE102021204606 A1 ist ein Saugbohrer mit einer Absaughülse bekannt.

Bei Bohren mit der dortigen Lösung lässt es sich nicht vermeiden, dass Bohrmehl, insbesondere zu Beginn eines Bohrvorganges, freigesetzt wird. Insbesondere ist damit unklar, ob Bohrmehl, das zu Anfang des Bohrvorganges gebildet wird, noch im Bohrloch verblieben ist oder nicht. Somit sind zumindest Kontrolltätigkeiten erforderlich, um sicherstellen zu können, dass ein in das Bohrloch gesetzter Anker alle Normvorschriften zum Setzen desselben sicher erfüllt. Die zitierte Offenlegungsschrift sieht daher eine separate Anbohrkappe vor. Diese muss jedoch beweglich auf einer Hülse des Saugbohrers entlanggleiten können. Ferner versperrt sie beim Ansetzen, also gerade zu einem sehr wichtigsten Zeitpunkt zur präzisen Positionierung des Saugbohrers, die Sicht auf die Spitze des Bohrkopfs beziehungsweise auf die Bohrposition.

Aufgabe der vorliegenden Erfindung ist es daher, einen Saugbohrer sowie weitere Vorrichtungen zur Nutzung des Saugbohrers vorzustellen, die ein effizientes und komfortables Bohren in Gestein ermöglichen.

Gelöst wird die Aufgabe durch ein System zum Saugbohren, umfassend einen Saugbohrer zum Bohren von Gestein, einen Absaugadapter und eine Absaughülse, wobei der Saugbohrer einen Schaft, einen Bohrkopf und ein Einsteckende umfasst, wobei entlang des Bohrkopfs und entlang des Schafts wenigstens jeweils eine Nute ausgebildet ist, wobei die Nuten im Bohrkopf sowie im Schaft zumindest teilweise durch wenigstens ein Deckelement bedeckt sind und am Schaft zwischen dem Deckelement und dem Schaft wenigstens ein Absaugkanal in Längsrichtung des Saugbohrers erstreckend ausgebildet sind, wobei das Deckelement am Schaft einen Kanalausgang ausbildet und der Kanalausgang Zugang zu dem wenigstens einen Absaugkanal bildet. Das System umfasst ferner eine Absaughülse, wobei die Absaughülse wenigstens den Kanalausgang abdeckt und eine Verbindungsöffnung und die Verbindungsöffnung mit dem Kanalausgang kommuniziert. Das System weist einen Absaugadapter auf, wobei der Absaugadapter einen Hohlraum aufweist, der als innenliegender Sammelraum ausgebildet ist und einen Abführkanal ausbildet. Der Absaugadapter ist an der Absaughülse angeordnet, wobei der Absaugadapter die Absaughülse zumindest partiell umgreift und die Verbindungsöffnung mit dem innenliegenden Sammelraum kommuniziert, so dass der innenliegende Sammelraum fluidisch mit dem wenigstens einen Absaugkanal in Verbindung steht.

Der Kanalausgang bildet einen Zugang zu dem wenigstens einen Absaugkanal. Dies bedeutet, dass der Absaugkanal über den Kanalausgang nach außen, d.h. außerhalb des Saugbohrers, verbunden ist.

Der Erfindung liegt dabei der Gedanke zugrunde, dass die Effizienz beim Bohren von Gestein gesteigert werden kann, wenn der Umfang erforderlicher Kontrolltätigkeiten minimiert werden kann. Dazu kann versucht werden, Bohrmehl über den gesamten Bohrvorgang hinweg, insbesondere zu Beginn des Bohrvorganges und im Besonderen bereits am Bohrkopf, aufzufangen und / oder abzusaugen. Dazu kann versucht werden, Saugöffnungen möglichst nahe an einer Spitze des Bohrkopfs auszubilden. Gleichzeitig sollte der Querschnitt der Saugöffnungen insgesamt möglichst groß sein, um einen möglichst geringen Saugwiderstand zu ermöglichen und um auch größere Partikel absaugen zu können. Beide Aspekte können durch die vorliegende Lösung erreicht werden. Durch die Ausgestaltung des Saugbohrers als Nutenbohrer, der Saugöffnungen in Form von bis in den Bohrkopf hinein reichenden Nuten aufweist, kann die Saugöffnung mit einem großen Querschnitt versehen werden. Dadurch, dass das Deckelement wenigstens bis über einen Teil des Bohrkopfs ragt, reicht auch der durch die Nute und das Deckelement gebildete Absaugkanal bis dicht an die Spitze des Bohrkopfs heran. Somit ergibt sich eine optimierte Saugleistung von Beginn des Bohrvorganges an. Selbst direkt bei Ansetzen und Start des Bohrvorganges entstehendes Bohrmehl kann vom Absaugkanal erfasst und abgesaugt werden. So kann mit großer Sicherheit gewährleistet werden, dass im Bohrloch kein oder höchstens nur in sehr geringem Maße Bohrmehl verbleibt. Selbst Anker oder Dübel, die sonst ein separat gereinigtes Bohrloch voraussetzen, beispielsweise ein chemischer Dübel, können in der Regel unmittelbar nach dem Bohren gesetzt werden.

Die bei der Erfindung ergebende Ausgestaltung mit auf dem Schaft angeordneter Absaughülse und an dieser angeordnetem Absaugadapter ermöglicht, dass das Bohrmehl sicher Staubsauger abgeführt werden der am Absaugadapter angeschlossenen, ohne dass Bohrmehl den wenigstens einen Absaugkanal, den Kanalausgang und/ oder Verbindungsöffnung sowie den Sammelraum verstopft. Das Bohren von mit dem Bohren gereinigten Löcher, ist somit gewährleistet.

Zudem ermöglicht der Aufbau mit Saugbohrer, Absaughülse und Absaugadapter einen modularen Aufbau, so dass - falls dennoch ein Reinigen des wenigstens einen Absaugkanals notwendig wäre - das System zerlegt werden kann und die einzelnen jeweiligen Komponenten einschließlich Deckelelement vom System vereinzelt zugänglich sind und gereinigt werden können.

Der modulare Aufbau ermöglicht in einer Ausführungsform, dass für mehrere Größen von Saugbohrer, insbesondere verschiedene Durchmesser von Saugbohrer, eine oder wenige Einheitsgrößen von Absaugadapter bereitgestellt werden müssen. Ein entsprechender Größenausgleich zu den unterschiedlich großen Saugbohrern erfolgt beispielsweise durch entsprechend angepasster Absaughülse. Der Innendurchmesser der Absaughülse kann in einer Ausgestaltung dem Außendurchmesser des Saugbohrers, insbesondere der vorhergesehenen Kontaktstelle des Saugbohrers, entsprechen. Der Außendurchmesser der Absaughülse zumindest des Bereichs, der für den Kontaktbereich zum Absaugadapter vorgesehen ist, entspricht der Größe des vorgesehenen Kontaktbereichs des Absaugadapters, d.h. für den Bereich, der die Absaughülse umgreifend kontaktiert. Beispielsweise kann ein Absaugadapter für einen Außendurchmesser der Absaughülse von 14mm vorgesehen sein. Die Absaughülse hat einen Außendurchmesser am Kontaktbereich von entsprechend 14mm. Der Innendurchmesser der Absaughülse entspricht dem Außendurchmesser des Saugbohrers am Kontaktbereich. Beispielsweise weist der Saugbohrer am Schaft einen Durchmesser von 10mm auf und die Absaughülse entsprechend einen Innendurchmesser von 10mm aufweist.

Der Absaugadapter weist eine Abführöffnung auf, die einen Zugang zum Abführkanal von außerhalb des Systems ermöglicht. An der Abführöffnung ist beispielsweise eine Unterdruckquelle, bspw. ein Staubsauger, angeordnet. Die Unterdruckquelle ermöglicht das Absaugen während des Betriebs von Bohrmehl vom Bohrkopf über den wenigstens einen Absaugkanal, den Kanalausgang, Verbindungsöffnung, Sammelraum und Abführkanal.

Im Rahmen dieses Dokuments ist oftmals von einem Durchmesser die Rede. Sofern nichts anderes bestimmt oder technisch unmöglich, können die Bauteile wie Absaughülse oder Schaft zumindest partiell eine von der Kreisform abweichendes Außenprofil der Querschnittsfläche in ihrer Längsrichtung aufweisen.

In einer Ausgestaltung ist die Absaughülse zumindest an einem Bereich, welcher benachbart zu einem Ende der Absaughülse ausgebildet, welche dem einsteckende zugeordnet ist, elastisch ausgebildet, wobei der Absaugadapter diesen elastischen Bereich der Absaughülse gegen den Schaft drückt. Dabei kann vorgesehen sein, dass die Absaughülse gegenüber dem Schaft fixiert wird oder nur fast, jedoch vorzugsweise dichtend gegenüber dem Schaft gehalten wird. Der elastische Bereich kann dabei direkt am Ende der Absaughülse ausgebildet sein und/ oder an einem Bereich, beabstandet zu diesem Ende der Absaughülse, welches dem Einsteckende zugeordnet ist, ausgebildet sein. Beispielweise erstreckt sich der elastische Bereich bis zu 70% der gesamten Länge der Absaughülse vom Ende, welches dem Einsteckende zugeordnet ist, vorzugsweise bis zu 40%. In einer Ausgestaltung ist zwischen dem Einsteckende zugeordneten Ende und dem elastischen Bereich ein Abstand von 5% der gesamten Länge der Absaughülse und/ oder 5mm.

In einer Ausführungsform ist die Absaughülse rohrförmig entlang einer Längsachse der Absaughülse ausgebildet. Die Absaughülse weist dabei entlang ihrer Längsachse einen freien Innenraum auf. Die Längsachse der Absaughülse erstreckt sich vorzugsweise parallel zur Längsachse des Saugbohrers, insbesondere verläuft sie koaxial, d.h. deckungsgleich zur Längsachse des Saugbohrers. Der Saugbohrer erstreckt sich dabei zumindest partiell in dem freien Innenraum der Absaughülse. Vorzugsweise erstreckt sich der Saugbohrer durch den freien Innenraum der Absaughülse. Dabei ist der freie Innenraum der Absaughülse als Durchgangsöffnung ausgebildet.

Das Deckelement erstreckt sich über die Nute, dass sie diese zumindest teilweise abdecken. In einer Ausführungsform das Deckelement an einem vom Bohrkopf entfernten Abschnitt eine Öffnung auf, wodurch Zugriff zu der Nute möglich ist. In einer Ausgestaltung erstrecken sich die Nute vom Bohrkopf nur partiell und enden in einem Bereich, der vom Bohrkopf und vom Einsteckende beabstandet ist. In einer Ausgestaltung erstreckt sich das Deckelement nicht vom Bohrkopf bis über diesen Bereich, sondern enden vorzeitig, wodurch das Deckelement den Kanalausgang in dem Bereich ausbildet, an dem die Nute endet.

Erfindungsgemäß ist die Absaughülse am Schaft angeordnet. Die Absaughülse dient dazu, den entlang des Schafts ausgebildeten Absaugkanal zum Absaugadapter einer Absauganlage zu führen.

In einer Ausführungsform ist die Verbindungsöffnung als Loch ausgebildet. Dabei erstreckt sich die Verbindungsöffnung durch eine Wand der Absaughülse entlang einer Verbindungsöffnungsachse. Die Verbindungsöffnungsachse kann senkrecht einer Längsachse der Absaughülse ausgebildet ein. In einer Ausgestaltung verläuft die Verbindungsöffnungsachse schräg zur Längsachse der Absaughülse. Dabei ist die Verbindungsöffnungsachse derart ausgerichtet, dass sie zur Längsachse der Absaughülse hin bei montierter Absaughülse an dem Saugbohrer zum Bohrkopf weist. Somit befindet sich das innenwärtige Ende der Verbindungsöffnung näher am Bohrkopf als das außenwärtige Ende. Mit dieser Ausgestaltung ist es möglich, Bohrmehl effizienter aus dem wenigstens einen Absaugkanal abzuführen.

Bei einer Ausführungsform kann die Absaughülse drehfest mit dem übrigen Schaft verbunden sein. Bei einer solchen Ausführungsform kann vorgesehen sein, dass sich die Absaughülse mitsamt dem Schaft in dem Absaugadapter während des Bohrens dreht.

In der Ausführungsform, bei der die Absaughülse drehfest mit dem übrigen Schaft verbunden ist, kann die Absaughülse wenigstens eine radial umlaufende Nute aufweisen. Über die Nute kann die Absaughülse und der Saugbohrer drehbar zum Absaugadapter an diesem gelagert sein. Auf eine Einschnürung des Schafts des Saugbohrers, an der der Saugbohrer relativ zum Absaugadapter drehbar festgelegt werden kann, kann verzichtet werden.

Ist die Absaughülse drehfest mit dem Schaft verbunden findet während des Bohrens in der Regel eine Rotation des Saugbohrers mit der Absaughülse relativ zum Absaugadapter statt. Der Absaugadapter ist in dieser Ausführungsform drehbar am Saugbohrer und/ oder an der Absaughülse gelagert. Der Absaugadapter ist dabei mit der Absaughülse und/ oder mit dem Saugbohrer verbunden, dass der Absaugadapter in seiner Entfernung zum Bohrkopf verbleibt. Vorzugsweise ist der Absaugadapter weiterhin im Wesentlichen abgedichtet mit dem Saugbohrer und/ oder Absaughülse verbunden, so dass ein sicheres Absaugen des Bohrmehls von dem Absaugkanal möglich ist.

Bei einer alternativen Ausführungsform kann der Schaft drehbar in der Absaughülse aufgenommen sein. Dabei kann es vorteilhaft sein, wenn die Absaughülse mehrere Verbindungsöffnungen aufweist. Somit kann bei Drehen des Saugbohrers relativ zur Absaughülse immer wieder wenigstens eine der Verbindungsöffnungen mit dem Absaugkanal korrespondieren und ein Absaugen von Bohrmehl aus dem Absaugkanal ermöglich. Ein Unterdruckabriss kann damit verhindert werden. Die mehreren Verbindungsöffnungen sind vorzugsweise in einem gleichen Abstand zum Bohrkopf bei montierter Absaughülse angeordnet.

In einer Ausführung ist die Absaughülse rohrförmig entlang einer Längsachse der Absaughülse ausgebildet. Die Absaughülse weist entlang ihrer Längsachse einen freien Innenraum auf, wobei sich eine Längsachse des Saugbohrers parallel, insbesondere koaxial, zur Längsachse der Absaughülse erstreckt und der Saugbohrer zumindest partiell in dem freien Innenraum der Absaughülse, insbesondere durch den freien Innenraum der Absaughülse erstreckt, wobei der freie Innenraum der Absaughülse als Durchgangsöffnung ausgebildet ist. Mit dieser Ausgestaltung ist es möglich, dass die Absaughülse den Saugbohrer umgibt. Vorzugsweise ist die Durchgangsöffnung der Absaughülse entsprechend ihrer Formgebung korrespondierend der Außenform des Saugbohrers ausgebildet, so dass die Absaughülse um den Saugbohrer, insbesondere im Bereich des Kanalausgangs, angeordnet werden kann. In einer Ausgestaltung ist die Absaughülse ausgebildet, dass die Innenwand der Durchgangsöffnung sich partiell in den Kanalausgang erstreckt. Dies ermöglicht, dass die Absaughülse an den Saugbohrer, beispielsweise an dem Deckelement und/ oder dem Schaft aufgesetzt und hinsichtlich Lage positioniert werden kann. Weiterhin kann eine Zuordnung der Verbindungsöffnung der Absaughülse zum Kanalausgang hergestellt werden, so dass sichergestellt wird, dass beide miteinander korrespondieren.

In einer Ausführungsform ist der Absaugadapter rohrartig ausgebildet. Dabei erstreckt sich der Absaugadapter entlang einer Längsachse des Absaugadapters. Die Längsachse des Absaugadapters ist vorzugsweise nicht koaxial zur Längsachse des Saugbohrers angeordnet. Vorzugsweise ist die Längsachse des Absaugadapters in einem Winkel größer 45° insbesondere in einem Winkel größer 75° zur Längsachse des Saugbohrers angeordnet. Dies lässt eine besonders günstige Anordnung des Absaugadapters zu, während gleichzeitig eine Abführung des Bohrmehls über den Absaugadapter bzw. des innenliegenden Sammelraums vereinfacht und ohne störende Abführleitungen möglich ist. Insbesondere ist mit der so verwirklichten Anordnung der Absaugadapter platzsparend am Saugbohrer befestigt, wobei gleichzeitig beim Bohren oder Meißeln der Absaugadapter nicht stört.

In einer Ausführungsform weist der Absaugadapter eine Adapteröffnung auf. Die Adapteröffnung erstreckt sich vorzugsweise durchgehend durch den Absaugadapter. Dabei erstreckt sich die Adapteröffnung, d.h. eine Längsachse der Adapteröffnung, nicht koaxial zur Längsachse des Absaugadapters. D.h., die Adapteröffnung erstreckt sich durch den Absaugadapter schräg zur Längsachse des Absaugadapters, vorzugsweise in einem Winkel zwischen 10° und 90°, insbesondere in einem Winkel zwischen 70° und 90°. In einer Ausführungsform erstreckt sich die Adapteröffnung in einem Winkel von 90° zur Längsachse des Absaugadapters. Eine Anordnung, in der sich die Adapteröffnung schräg zur Längsachse des Absaugadapters erstreckt begünstigt den Bohrmehlabtransport von dem Kanalausgang zum innenliegenden Sammelraum des Absaugadapters, ist jedoch in der Herstellung und Anordnung des Absaugadapters an dem Saugbohrer bzw. an der Absaughülse aufwändiger. Eine Anordnung, in der sich die Adapteröffnung im Wesentlichen orthogonal zur Längsachse des Absaugadapters erstreckt, erleichtert die Herstellung und Anordnung des Absaugadapters an dem Saugbohrer bzw. an der Absaughülse, insbesondere wenn eine dichtende Anordnung, wie vorliegend bevorzugt, hergestellt werden soll.

In einer Ausgestaltung ist vorgesehen, dass die Längsachse der Adapteröffnung die Längsachse des Absaugadapters schneidet. Eine solche Ausgestaltung erleichtert die Anordnung und Herstellung des Absaugadapters passend für eine Vielzahl an Absaughülsen bzw. Saugbohrer.

In einer Ausgestaltung ist die Adapteröffnung als O-Profil, C-Profil, vierkant-Profil oder als U-Profil ausgebildet. Insbesondere kann der Adapteröffnung ein Zwischenelement angeordnet werden, damit der Absaugadapter mit seiner Adapteröffnung passend an der Absaughülse angeordnet werden kann. Entsprechend kann das Zwischenelement als Transfer von einem C-Profil der Adapteröffnung auf eine runde Querschnittsform der Absaughülse ausgebildet sein, so dass das Zwischenelement an der Adapteröffnung und gleichzeitig an der Absaughülse angeordnet ist. Insbesondere kann das Zwischenelement auch zum Ausgleich von verschiedenen Größen von Absaugöffnungen und/ oder Absaughülsen ausgebildet sein und/ oder verschiedene Zwischenelement für unterschiedliche Absaughülsen und/ oder Absaugadapter vorgehalten werden.

Der Bohrkopf kann aus einem Hartmetall ausgebildet sein. Er kann gesintert sein. Er kann an den Schaft angeschweißt und / oder gelötet sein. Denkbar ist auch, dass der Bohrkopf mittels Formschluss mit dem Schaft verbunden ist. In letzterem Fall ist denkbar, dass der Bohrkopf lösbar, insbesondere werkzeuglos lösbar, am Schaft fixiert ist.

Das Deckelement kann einen Kopfabschnitt und einen Schaftabschnitt aufweisen. Ein maximaler Durchmesser des Schaftabschnitts kann kleiner sein als ein maximaler Durchmesser des Kopfabschnitts, sodass gewährleistet werden kann, dass zumindest das Deckelement des Schaftabschnitts sich während des Bohrens frei im Bohrloch drehen kann. Somit können Reibungsverluste während des Bohrens reduziert werden. Gegebenenfalls kann auch ein Glattschleifen der Bohrlochwand vermieden werden, sodass die Bohrlochwand nicht nachträglich wieder aufgeraut werden braucht.

Ist der Bohrkopf gesintert, ist denkbar, die wenigstens eine Nute am Bohrkopf durch Formen des Grünlings des Bohrkopfs auszubilden. Somit kann auf zusätzliche Bearbeitungsschritte, insbesondere Bohren oder Fräsen in beispielsweise Hartmetall des Bohrkopfs, verzichtet werden.

Um den Abtransport von Bohrmehl weiter zu verbessern, kann wenigstens eine Nute des Bohrkopfs mit wenigstens einer Nute des Schafts fluchten. Unter "fluchten" kann dabei verstanden werden, dass beide Nuten parallel zu einer Längsachse des Saugbohrers verlaufen und ineinander übergehen, unbeschadet davon, ob die Nuten zumindest streckenweise unterschiedlich weit außen, also mit unterschiedlichen Radialabständen von der Längsachse, verlaufen. Bohrmehl kann so über den gesamten Absaugkanal hinweg geradeaus, also parallel zur Längsachse abgesaugt werden, sodass Bohrmehl mit geringem Saugwiderstand abgesaugt werden kann.

Bei einer Klasse von Ausführungsformen kann das Deckelement wenigstens entlang des Schafts als Hülse ausgebildet sein. Die Hülse kann einfach über den Schaft übergestülpt werden, so dass auf einfache Weise alle Nuten entlang des Schafts durch die Hülse bedeckt sein können.

Bei einer weiteren Klasse von Ausführungsformen kann das Deckelement zumindest in einem Bereich eine Gitterstruktur aufweisen. Beispielsweise können am Schaft mehrere geradlinig und parallel zu einer Längsachse des Schafts verlaufende Nuten ausgebildet sein. Jede einzelne der Nuten des Schafts kann durch ein Teilelement des Deckelements und / oder durch ein separates Element des Deckelements bedeckt sein. Die Teilelemente können dann wiederum miteinander verbunden sein.

Allgemein kann das Deckelement des Schafts mehrere Teilelemente umfassen. Somit kann das Deckelement ausgebildet sein, den Schaft nicht vollständig zu überdecken, sondern lediglich teilweise. Somit kann Material eingespart werden. Reibung während des Bohrens, insbesondere zwischen dem Deckelement und einer Bohrlochwand, kann reduziert oder vermieden werden.

Denkbar ist, dass ein radial um den Schaft umlaufender Verbindungsring die einzelnen Teilelemente miteinander verbindet und / oder am Schaft fixiert. Die Teilelemente können somit zusammen mit dem Verbindungsring eine Form eines ringförmigen Gitterzauns aufweisen.

Denkbar ist weiter, dass die Teilelemente und / oder das gesamte Deckelement innerhalb einer Umfangfläche das Schafts verlaufen.

Denkbar ist, dass wenigstens eine der Nuten durch eine Röhre ausgekleidet ist. Insbesondere kann das Deckelement wenigstens eine der Nuten als Röhre auskleiden. Dazu kann wenigstens eines der Teilelemente eine Röhrenform aufweisen. Das Teilelement und / oder das Deckelement können beispielsweise im Querschnitt dreieckig, insbesondere abgerundetdreieckig, ausgebildet sein.

Um Gewicht und / oder um CO₂ einzusparen, kann das Deckelement wenigstens in einem Abschnitt aus einem Kunststoff ausgebildet sein. Dies ist insbesondere dann besonders vorteilhaft möglich, wenn durch eine der vorangehend beschriebenen Maßnahmen eine lediglich geringe Reibung zwischen dem Deckelement und der Bohrlochwand zu erwarten ist.

Zwischen dem Absaugadapter und der Absaughülse kann wenigstens ein elastischer Ring angeordnet sein, beispielsweise einen Gummiring. Der elastische Ring kann zur Abdichtung zwischen dem Absaugadapter und der Absaughülse dienen. Der elastische Ring selbst kann in Radialnuten des Absaugadapters und / oder der Absaughülse sitzen. So kann er ferner ein versehentliches Herausgleiten des Saugbohrers aus dem Absaugadapter verhindern.

In einer Ausgestaltung ist der elastische Ring an einem Abschnitt der Absaughülse angeordnet, der zwischen dem Einsteckende des Saugbohrers und der Verbindungsöffnung liegt. In einer Ausführungsform ist der elastische Ring an einem Abschnitt der Absaughülse angeordnet, der zwischen dem Bohrkopf des Saugbohrers und der Verbindungsöffnung liegt.

Vorzugsweise kontaktiert dabei der elastische Ring sowohl die Außenwand der Absaughülse als auch die Wand, oder ein Teilabschnitt davon, des Absaugadapters, welche die Absaughülse und/ oder den Saugbohrer umgreift und diesen zugeordnet ist. Ein lichter Abstand zwischen der Wand des Absaugadapters, welche die Absaughülse und/ oder den Saugbohrer umgreift und diesen zugeordnet ist, und der Absaughülse kann derart sein, dass der elastische Ring eingeklemmt wird und formschlüssig, vorzugsweise kraftschlüssig, den Absaugadapter montiert bzw. hält.

In einer Ausgestaltung liegt die Wand, oder ein Teilabschnitt davon, des Absaugadapters, welche die Absaughülse und/ oder den Saugbohrer umgreift und diesem zugeordnet ist, formschlüssig und/ oder kraftschlüssig an der Absaughülse und/ oder Saugbohrer an. In einer Ausführungsform ist dieser Bereich des Absaugadapters so dimensioniert und ausgestaltet, dass er auf die Absaughülse entlang der Längsachse aufgeschoben werden kann, jedoch sich an die Kontur der Außenwand der Absaughülse anpasst und/ oder angepasst ist. Die Dimension des Bereichs des Absaugadapters ist bevorzugt derart, dass der Absaugadapter fixierend an der Absaughülse angeordnet wird und somit ein Kraftschluss bewirkt wird.

In einer bevorzugten Ausgestaltung ist die Absaughülse und/ oder der Absaugadapter flexibel, insbesondere elastisch zumindest partiell ausgebildet. Beispielsweise weist ist die Wand des Absaugadapters, welche die Absaughülse und/ oder den Saugbohrer umgreift und diesem zugeordnet ist, oder zumindest ein Teilabschnitt davon, flexibel und/ oder elastisch ausgebildet, damit der Absaugadapter an der Absaughülse angeordnet werden kann und gleichzeitig möglichst spaltfrei und bevorzugt kraftschlüssig damit verbunden werden kann, wobei gleichzeitig eine abdichtende Verbindung erzielt werden könnte.

In einer Ausgestaltung weist die Absaughülse einen Bereich auf, der sich zumindest abschnittsweise in den Kanalausgang erstreckt. Dieser Bereich ist vorzugsweise elastisch ausgebildet. Somit kann die Absaughülse durch Eingreifen in den Kanalausgang an den Saugbohrer befestigt werden. Weiterhin kann die Absaughülse derart elastisch ausgebildet sein, dass bei Anordnen des Absaugadapters, insbesondere Aufschieben des Absaugadapters auf die Absaughülse, verpresst wird oder in den Kanalausgang verdrängt wird, so dass der Absaugadapter an der Absaughülse angeordnet und fixiert wird. Insbesondere kann dabei der Absaugadapter und/ oder die Absaughülse eine partielle Verdickung aufweisen, womit entlang einer Linie oder definierten Punkten eine Kraft zwischen Absaugadapter und Absaughülse ausgeübt werden kann. Vorzugsweise ist der Absaugadapter ebenfalls an den korrespondierenden Berührpunkten/ Berührflächen zumindest abschnittsweise elastisch ausgebildet. Die Absaughülse und/ oder der Absaugadapter können auch eine elastische Oberflächenschicht aufweisen, um gleiche oder analoge Effekte zu erzielen.

In einer Ausführungsform ist vorgesehen, dass die Absaughülse verjüngend ausgebildet ist, so dass der Absaugadapter auf die Absaughülse aufgeschoben werden kann bis der Absaugadapter fest auf der Absaughülse aufsitzt.

Selbstverständlich ist auch eine Kombination der oben genannten Anordnungsmöglichkeiten denkbar, so dass der Absaugadapter an einer Stelle mittels elastischen Rings und an einer anderen Stelle mittels Form- und/ oder Kraftschluss anhand eines flexiblen und/ oder elastischen Materials des Absaugadapters an der Absaughülse und/ oder am Saugbohrer montiert wird.

In einer Ausgestaltung weist der Absaugadapter eine Arretierungsnase auf, um die Position des Absaugadapters gegenüber der Absaughülse zu begrenzen. Die Arretierungsnase kann eine Bewegung in eine Richtung, beispielsweise eine radiale Richtung gegenüber der Absaughülse und/ oder eine Bewegung entlang der Längsachse der Absaughülse begrenzen. Insbesondere kann die Arretierungsnase rastend oder und/ oder formschlüssig an der Absaughülse und/ oder an dem Saugbohrer, insbesondere dessen Schaft, fixiert werden.

Vorzugsweise kann der Absaugadapter ohne bewegliche Teile ausgebildet und dadurch besonders langlebig sein. Er kann wenigstens zweiteilig sein. Insbesondere kann er aus zwei Hälften ausgebildet sein, die beispielsweise aufeinander steckbar ausgeformt sein können. Dann kann man den Saugbohrer, insbesondere zusammen mit der Absaughülse, werkzeuglos in den Absaugadapter einlegen. Die Hälften können aufeinander gesteckt werden. Es benötigt dann beispielsweise keinen separaten Verriegelungsmechanismus, um den Saugbohrer in den Absaugadapter zu führen und / oder um ihn dort gegen Herausrutschen zu sichern.

Denkbar ist auch ein System mit einem Meißel, das analog zum System zum Saugbohren mit einem Saugbohrer als System zum Saugmeißeln mit einem Saugmeißel ausgebildet ist. Ein Unterschied kann sein, dass anstelle eines Bohrkopfes ein Meißelkopf vorgesehen ist. Der Meißelkopf kann eine punktförmige Spitze aufweisen. Bei alternativen Ausführungsformen als Flachmeißel kann der Meißelkopf eine Meißelklinge aufweisen.

In den Rahmen der Erfindung fällt des Weiteren eine Werkzeugmaschine, insbesondere eine meißelnde Werkzeugmaschine wie beispielsweise eine Hammerbohrmaschine oder eine Meißelmaschine, zur Bearbeitung von Gestein, mit einem Absaugadapter, in dem ein Saugbohrer mit Absaughülse der vorangehend und / oder im Folgenden beschriebenen Art angeordnet ist.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In den Figuren sind Ausführungsbeispiele der Erfindung schematisch dargestellt und in der nachfolgenden Beschreibung näher erläutert.

### Es zeigen:

- Fig. 1: einen Saugbohrer mit einem Absaugadapter in perspektivischer Darstellung;
- Fig. 2: eine Längsschnittansicht des Saugbohrers und des Absaugadapters gemäß Fig. 1;
- Fig. 3: eine Detailansicht aus der Schnittansicht gemäß Fig. 2;
- Fig. 4: einen alternativen Saugbohrer mit einem Absaugadapter in perspektivischer Darstellung;
- Fig. 5 und 6: den Saugbohrer gemäß Fig. 4 ohne Deckelement mit der Absaughülse in perspektivischen Seitenansichten aus verschiedenen Blickrichtungen;
- Fig. 7: eine Längsschnittansicht des Saugbohrers und des Absaugadapter gemäß Fig. 4 und
- Fig. 8 und 9: Querschnittsansichten von Saugbohrern mit verschiedenen Varianten von Deckelementen.

In der nachfolgenden Beschreibung der Figuren werden zur Erleichterung des Verständnisses der Erfindung für gleiche oder sich funktional entsprechende Elemente jeweils die gleichen Bezugszeichen verwendet.

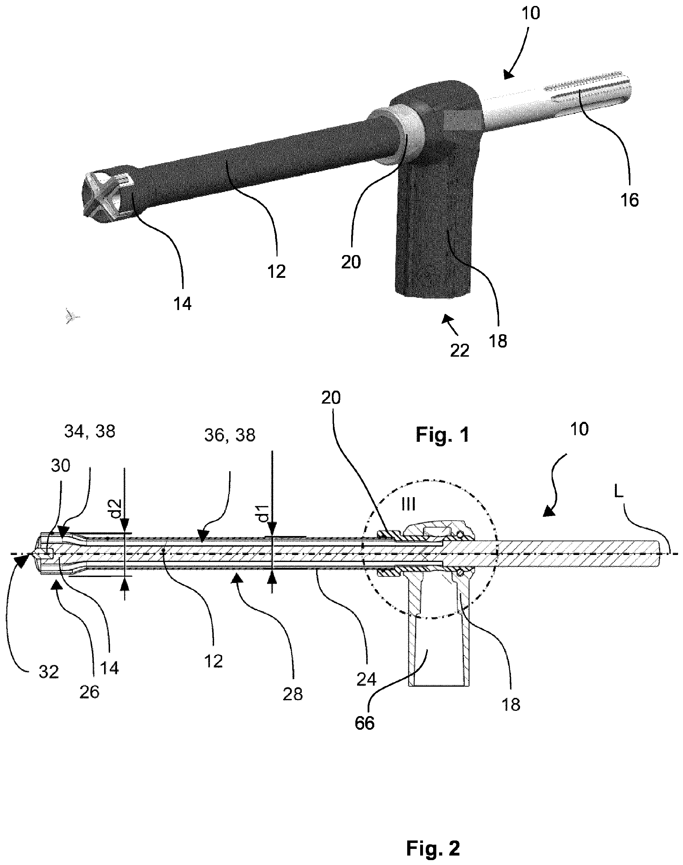

Fig. 1 zeigt einen Saugbohrer 10 mit einem Schaft 12, an dem an einem Ende ein Bohrkopf 14 und am anderen Ende ein Einsteckende 16 ausgebildet sind. Der Saugbohrer 10 ist mit einem Absaugadapter 18 über eine Absaughülse 20 verbunden. Ein Sauganschluss 22 des Absaugadapters kann mit einem Saug- und / oder Blasgerät zum Absaugen von Bohrmehl und / oder zum Ausblasen von beispielsweise Bohrlöchern verbunden werden.

Fig. 2 zeigt eine Längsschnittansicht des Saugbohrers 10 und des Absaugadapters 18. Zu erkennen ist, dass der Schaft 12 und der Bohrkopf 14 von einem Deckelement 24 zumindest teilweise bedeckt sind. Das Deckelement 24 ist in diesem Ausführungsbeispiel einstückig ausgebildet.

Das Deckelement 24 weist einen Kopfabschnitt 26 und einen Schaftabschnitt 28 auf. Der Kopfabschnitt 26 überdeckt den Bohrkopf 14 zumindest teilweise. Insbesondere überdeckt in diesem Ausführungsbeispiel der Kopfabschnitt 26 den Bohrkopf mit Ausnahme von Schneiden 30 sowie einer Stirnseite 32. Der Schaftabschnitt 28 überdeckt den Schaft 12 zumindest teilweise, insbesondere in einem Bereich zwischen dem Bohrkopf 14 und dem Absaugadapter 18. Ein maximaler Durchmesser d1 des Schaftabschnitts 28 ist kleiner als ein maximaler Durchmesser d2 des Kopfabschnitts 26.

Entlang des Bohrkopfs 14 sind Nuten 34 und im Schaft 12 Nuten 36 ausgebildet. Die Nuten 34 im Bohrkopf 14 sowie die Nuten 36 im Schaft 12 sind zumindest teilweise durch das Deckelement 24 bedeckt. Dadurch sind zwischen dem Deckelement 24 und dem Schaft 12 Absaugkanäle 38 ausgebildet. Zur Vereinfachung der Darstellung sind lediglich jeweils eine der Nuten 34, 36 und einer der Absaugkanäle 38 mit einem Bezugszeichen versehen. Die Nuten 34, 36 und damit die Absaugkanäle 38 verlaufen, abgesehen von variierenden Radialabständen, parallel zu einer Längsachse L des Schafts 12 und des Bohrkopfs 14. Die Nuten 34 des Bohrkopfs 14 fluchten jeweils mit korrespondierenden Nuten 36 des Schafts 12.

Der Bohrkopf 14 ist aus einem Wolfram-haltigen Hartmetall gesintert. Die Nuten 34 am Bohrkopf 14 sind vor dem Sintern zu einem Braunling bereits im Grünling des Bohrkopfs 14 geformt worden.

In diesem Ausführungsbeispiel ist das Deckelement 24 wenigstens entlang des Schafts 12 als Hülse ausgebildet. Es ist einstückig und insbesondere aus einem Kunststoff ausgebildet.

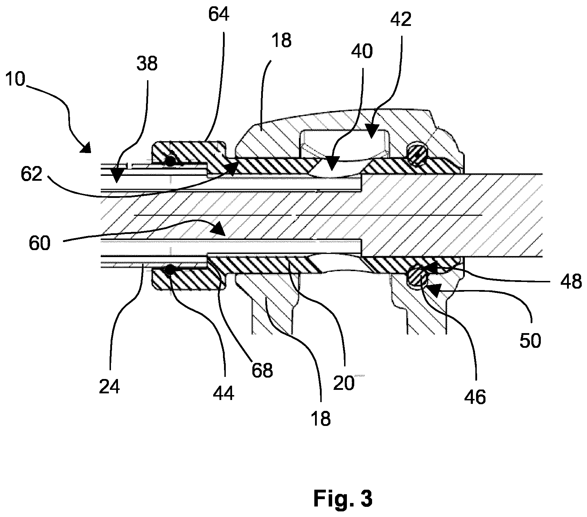

Eine vergrößerte Detailansicht eines Bereichs III aus Fig. 2 zeigt Fig. 3.

Die Absaugkanäle 38, von denen wiederum vereinfachend lediglich einer in Fig. 3 mit einem Bezugszeichen versehen ist, bilden wenigstens einen Kanalausgang 60 aus und münden über Verbindungsöffnungen 40 in der Absaughülse 20 in einen Sammelraum 42 des Absaugadapters 18. Der Sammelraum 42 ist wiederum mit dem Sauganschluss 22 verbunden, sodass Bohrmehl entlang der Absaugkanäle 38 in den Sammelraum 42 und von dort in ein an den Sauganschluss 22 angeschlossenes Sauggerät, welches über einen Abführkanal 66 (s. Fig. 2, in Fig. 3 nicht dargestellt), abtransportiert werden kann.

Vorliegend ist der Kanalausgang 60 dadurch ausgebildet, dass das Deckelement 24 in einem Abschnitt die Absaugkanäle 38 nicht abdeckt und so den Kanalausgang 60 zugänglich macht.

Die Absaughülse 20 ist im vorliegenden Ausführungsbeispiel drehfest mit dem Schaft 12 verbunden. Ein radial umlaufender O-Ring 44 befindet sich zwischen der Absaughülse 20 und dem Deckelement 24. Ein elastischer Ring 46 in Form eines Gummirings sitzt in radial umlaufenden Radialnuten 48 und 50 der Absaughülse bzw. des Absaugadapters 18. Die Absaughülse 20 ist gekröpft ausgebildet und weist einen Kragen bzw. einen gekröpften Flansch 64 auf. Der gekröpfte Flansch 64 erstreckt sich von der Absaughülse an einem Bereich eines Endes, welches dem Bohrkopf zugordnet, ist, von der Längsachse der Absaughülse 20 weg.

Vorzugsweise ist der Durchmesser des Schafts 16 kleiner als der Außendurchmesser d1 des Deckelements 12. Im Vorliegenden Ausführungsbeispiel entspricht das Innenprofil der Absaughülse 20 dem Außenprofil des Schafts 16 in dem Abschnitt, an dem der Kanalausgang 60 ausgebildet ist, sowie dem weiteren Außenprofil zum Einsteckende hin. Die Absaughülse 20 weist am gekröpften Flansch 64 ein erweitertes Innenprofil auf, so dass der gekröpfte Flansch 64 auf dem Deckelement 24 aufsitzt. Dabei bildet der gekröpfte Flansch 64 einen Arretierkragen 68, welcher zur Positionierung der Absaughülse 20 am Saugbohrer 10 dient, in dem der Arretierkragen im angeordneten Zustand der Absaughülse 20 am Saugbohrer 10 gegen das Deckelement 24 anliegt. Eine weitere Bewegung der Absaughülse 20 zum Bohrkopf 14 hin wird somit verhindert. Zudem ist der gekröpfte Flansch 64 vorzugsweise annähernd dichtend an dem Deckelement 24 angeordnet. In einer bevorzugten Ausgestaltung ist der gekröpfte Flansch 64 aus einem elastischen Material und/ oder elastisch ausgebildet.

Damit benötigt die Absaughülse 20 kein bewegliches, beispielsweise längsverschiebbares, Teil. Auch der Absaugadapter 18 benötigt kein bewegliches, beispielsweise längsverschiebbares, Teil.

Der Absaugadapter 18 ist im vorliegenden Ausführungsbeispiel rohrförmig ausgebildet und ist an einem Ende verschlossen (in der Fig. 3 das obere Ende, nämlich welches der Absaughülse 20 zugeordnet ist). Der Innenraum des Absaugadapters 18 ist hohl ausgebildet und bildet somit einen Hohlraum. Der Innenraum des Absaugadapters 18 bildet den Sammelraum 42 und schließlich den Abführkanal 66 aus, der sich vom verschlossenen wegerstreckt. Der Absaugadapter 18 weist eine durchgehende Adapteröffnung 62 auf, die vorliegend senkrecht zur Längsachse des Absaugadapters 18 verläuft. Die Absaughülse 20 erstreckt sich durch die Adapteröffnung 62.

Als Alternative zur rohrförmigen Ausgestaltung des Absaugadapters 18 kann dieser mehrteilig ausgebildet sein, so dass beispielswiese der Abschnitt mit Adapteröffnung 62 aus mehreren zusammengesetzten Abschnitten hergestellt ist.

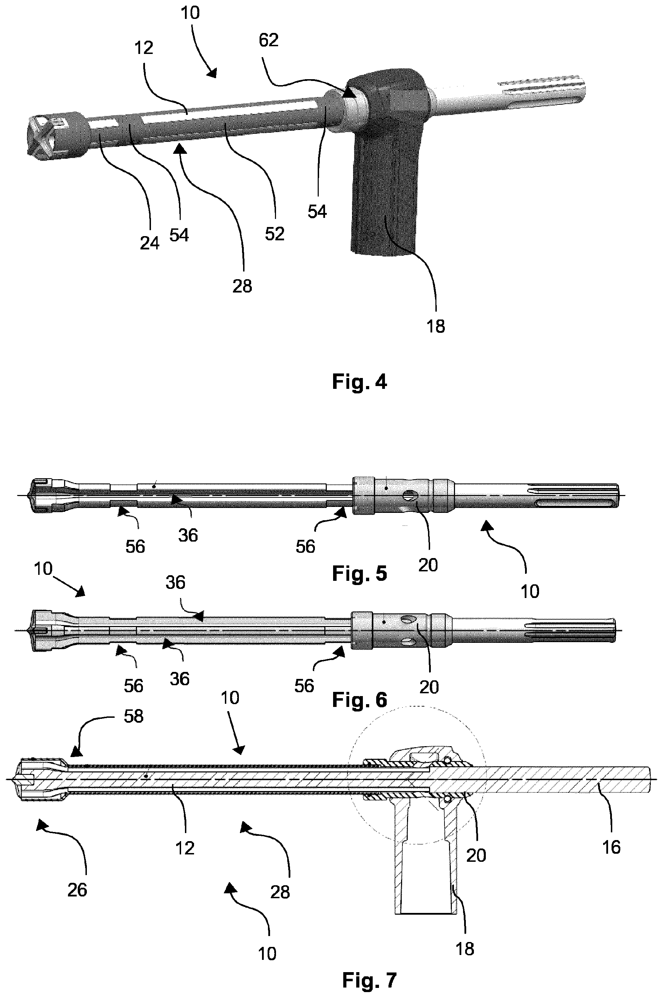

Fig. 4 zeigt eine weitere Ausführungsform eines Saugbohrers 10, der an einen Absaugadapter 18 angeschlossen ist. Soweit nicht anders beschrieben, können ein oder mehrere Merkmale dieser Ausführungsform mit den entsprechenden der vorangehend beschriebenen Ausführungsform übereinstimmen.

Ein Unterschied zu den in der vorangehend beschriebenen Ausführungsform besteht insbesondere darin, dass das Deckelement 24 zumindest in einem Bereich eine Gitterstruktur aufweist und insoweit nicht als vollständig abdeckende Hülse ausgebildet ist. Es weist Teilelemente 52 auf, die die Nuten 36 (siehe Fig. 5) des Schaftabschnitts 28 jeweils einzeln abdecken. Zur Vereinfachung der Darstellung ist in Fig. 4 lediglich eines der Teilelemente 52 mit einem Bezugszeichen versehen.

Die Teilelemente 52 werden durch radial umlaufende Verbindungsringe 54 am Schaft 12 und damit auch aneinandergehalten. In dem in Fig. 4 gezeigten Ausführungsbeispiel sind die Teilelemente 52 über die Verbindungsringe 54 miteinander verbunden. Beispielsweise können die Teilelemente 52 und die Verbindungsringe 54 insgesamt als einstückiges Deckelement 24 ausgebildet sein. Denkbar ist alternativ, wenigstens einen der Verbindungsringe 54 als separaten Ring auszubilden.

Wenigstens eines der Teilelemente 52 kann einen Kunststoff umfassen.

Fig. 5 und Fig. 6, die beispielhaft jeweils perspektivische Seitenansichten des Saugbohrers 10 aus den vorhergehenden Ausführungsformen ohne Deckelement 24, jedoch mit Absaughülse 20, aus verschiedenen Blickrichtungen zeigen, lassen erkennen, dass im Schaft 12 zwei Radialnuten 56 ausgebildet sind, sodass die Verbindungsringe 54 (siehe Fig. 4) in diesen sitzen können. So kann das Deckelement 24 gegen Verschieben gesichert sein.

Fig. 7 zeigt eine Längsschnittansicht dieser Ausführungsform sowie des zugehörigen Absaugadapters 18. Der Saugbohrer 10 weist insoweit eine hohe Ähnlichkeit zu den vorangehend beschriebenen Ausführungsformen auf.

Denkbar ist eine Variation, bei der, wie in Fig. 7 gezeigt, ein Übergangsbereich 58 zwischen dem Kopfabschnitt 26 und dem Schaftabschnitt 28 steiler ausgebildet ist als in der Ausführungsform gemäß Fig. 2.

Denkbar ist eine weitere Variation, bei der, wie in Fig. 7 gezeigt, die Absaughülse 20 auf der Seite des Einsteckendes 16 über den Absaugadapter 18 hinausragt anstatt, wie in Fig. 2 abgebildet, mit Letzterem bündig abzuschließen. So kann der Schaft 12 noch stabiler in der Absaughülse 20 geführt sein.

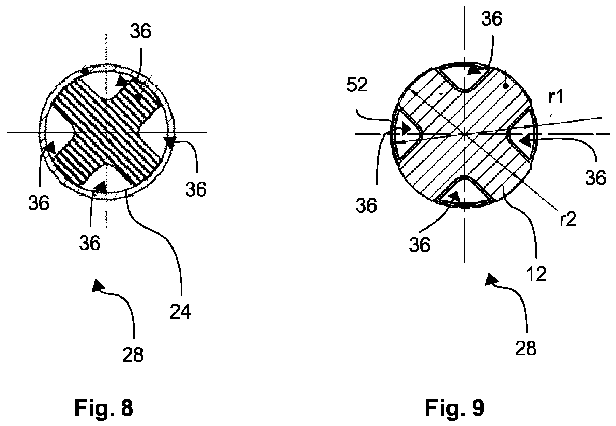

Fig. 8 und Fig. 9 zeigen Querschnitte des Schaftabschnitts 28 der Ausführungsform gemäß Fig. 1 bzw. gemäß Fig. 4.

In der Ausführungsform gemäß Fig. 1, siehe Fig. 8, bildet das Deckelement 24 im Bereich des Schaftabschnitts 28 eine Hülse und überdeckt dadurch gesamthaft alle Nuten 36 des Schaftabschnitts 28.

In der Ausführungsform gemäß Fig. 4, siehe Fig. 9, kleidet jedes der Teilelemente 52 eine der Nuten 36 des Schaftabschnitts 28 aus. Dazu ist jedes der Teilelemente 52 als Röhre mit abgerundet-dreieckigem Querschnitt ausgebildet. Vorzugsweise ist ein Außenradius r1 der Teilelemente 52 kleiner als ein maximaler Radius r2 des Schafts 12. Die Teilelemente 52 liegen somit vorzugsweise innerhalb des vom Schaft 12 einbeschriebenen Umfangskreises.

### Bezugszeichenliste

- 10: Saugbohrer
- 12: Schaft
- 14: Bohrkopf
- 16: Einsteckende
- 18: Absaugadapter
- 20: Absaughülse
- 22: Sauganschluss
- 24: Deckelement
- 26: Kopfabschnitt
- 28: Schaftabschnitt
- 30: Schneide
- 32: Stirnseite
- 34: Nute
- 36: Nute
- 38: Absaugkanal
- 40: Verbindungsöffnung
- 42: Sammelraum
- 44: O-Ring
- 46: elastischer Ring
- 48, 50: Radialnute
- 52: Teilelement
- 54: Verbindungsring
- 56: Radialnute
- 58: Übergangsbereich
- 60: Kanalausgang
- 62: Adapteröffnung
- 64: gekröpfter Flansch
- 66: Abführkanal
- 68: Arretierkragen
- III: Bereich
- L: Längsachse
- d1: Durchmesser
- d2: Durchmesser
- r1: Außenradius
- r2: Radius

## Patentansprüche

1. System zum Saugbohren, umfassend
einen Saugbohrer (10) zum Bohren von Gestein, einen Absaugadapter (18) und eine Absaughülse (20), wobei der Saugbohrer (10) einen Schaft (12), einen Bohrkopf (14) und ein Einsteckende (16) umfasst, wobei entlang des Bohrkopfs (14) und entlang des Schafts (12) wenigstens jeweils eine Nute (34, 36) ausgebildet ist, wobei die Nuten (34, 36) im Bohrkopf (14) sowie im Schaft (12) zumindest teilweise durch wenigstens ein Deckelement (24) bedeckt sind und am Schaft (12) zwischen dem Deckelement (24) und dem Schaft (12) wenigstens ein Absaugkanal (38) in Längsrichtung des Saugbohrers (10) erstreckend ausgebildet sind, wobei das Deckelement (24) am Schaft (12) einen Kanalausgang (60) ausbildet und der Kanalausgang (60) Zugang zu dem wenigstens einen Absaugkanal (38) bildet,
ein Absaughülse (20), wobei die Absaughülse (20) wenigstens den Kanalausgang (60) partiell abdeckt und eine Verbindungsöffnung (40) aufweist und die Verbindungsöffnung (40) mit dem Kanalausgang (60) kommuniziert; und
einen Absaugadapter (18) einen Hohlraum aufweist, der Hohlraum als innenliegenden Sammelraum (42) ausgebildet ist und einen Abführkanal (66) ausbildet;
wobei
der Absaugadapter (18) an der Absaughülse (28) angeordnet ist, wobei der Absaugadapter (18) die Absaughülse (20) zumindest partiell umgreift und die Verbindungsöffnung (40) mit den innenliegenden Sammelraum (42) kommuniziert, so dass der innenliegende Sammelraum (42) fluidisch mit dem wenigstens einen Absaugkanal (38) in Verbindung steht.

2. System nach Anspruch 1, **dadurch gekennzeichnet, dass** die Absaughülse (20) zumindest an einem Bereich, welcher benachbart zu einem Ende der Absaughülse (20) ausgebildet ist, welche dem Einsteckende (16) zugeordnet ist, elastisch ausgebildet wobei der Absaugadapter (18) diesen Bereich gegen den Schaft (12) drückt.

3. System nach einem der vorhergehenden Ansprüche, **dadurch gekennzeichnet, dass** die Absaughülse (20) rohrförmig entlang einer Längsachse der Absaughülse (20) ausgebildet ist und entlang der Längsachse der Absaughülse (20) einen freien Innenraum aufweist, wobei sich eine Längsachse des Saugbohrers (10) parallel, insbesondere koaxial, zur Längsachse der Absaughülse (20) erstreckt und der Saugbohrer (10) zumindest partiell in dem freien Innenraum der Absaughülse (20), insbesondere durch den freien Innenraum der Absaughülse (20), wobei der freie Innenraum der Absaughülse (20) als Durchgangsöffnung ausgebildet ist, erstreckt.

4. System nach einem der vorhergehenden Ansprüche, **dadurch gekennzeichnet, dass** der Absaugadapter (18) rohrartig ausgebildet ist und sich entlang einer Längsachse des Absaugadapters (18) erstreckt wobei die Längsachse des Absaugadapters (18) nicht koaxial zur Längsachse des Saugbohrers (10) angeordnet ist.

5. System nach einem der vorhergehenden Ansprüche, **dadurch gekennzeichnet, dass** der Absaugadapter (18) im Wesentlichen senkrecht oder einem Winkel zwischen 10° und 90° zur Längsachse des Absaugadapters (18) eine durchgehende Adapteröffnung (62) aufweist, durch die sich zumindest partiell die Absaughülse (20) erstreckt und die Absaughülse (20) zumindest partiell umgreift.

6. System nach Anspruch 5, **dadurch gekennzeichnet, dass** eine Längsachse der Adapteröffnung (62) die Längsachse des Absaugadapters (18) schneidet.

7. System nach einem der Ansprüche 5 oder 6, **dadurch gekennzeichnet, dass** die Adapteröffnung (62) ein O- Profil, ein C-Profil oder ein U-Profil aufweist.

8. System nach einem der vorhergehenden Ansprüche, **dadurch gekennzeichnet, dass** das Deckelement (24) einen Kopfabschnitt (26) und einen Schaftabschnitt (28) aufweist, wobei ein maximaler Durchmesser (d1) des Schaftabschnitts (28) kleiner als ein maximaler Durchmesser (d1) des Kopfabschnitts (26) ist.

9. System nach einem der vorhergehenden Ansprüche, **dadurch gekennzeichnet, dass** der Bohrkopf (14) gesintert ist, wobei die Nute (34, 36) am Bohrkopf (14) durch Formung des Grünlings des Bohrkopfs (14) ausgebildet ist.

10. System nach einem der vorhergehenden Ansprüche, **dadurch gekennzeichnet, dass** wenigstens eine Nute (34, 36) des Bohrkopfs (14) mit wenigstens einer Nute (34, 36) des Schafts (12) fluchtet.

11. System nach einem der vorhergehenden Ansprüche, **dadurch gekennzeichnet, dass** das Deckelement (24) wenigstens entlang des Schafts (12) als Hülse ausgebildet ist.

12. System nach einem der vorhergehenden Ansprüche, **dadurch gekennzeichnet, dass** das Deckelement (24) zumindest in einem Bereich (III) eine Gitterstruktur aufweist.

13. System nach einem der vorhergehenden Ansprüche, **dadurch gekennzeichnet, dass** das Deckelement (24) wenigstens eine Nute (34, 36) als Röhre auskleidet.

14. System nach einem der vorhergehenden Ansprüche, **dadurch gekennzeichnet, dass** das Deckelement (24) wenigstens in einem Abschnitt aus einem Kunststoff ausgebildet ist.

15. System nach einem der vorhergehenden Ansprüche, **dadurch gekennzeichnet, dass** das Deckelement (24) des Schafts (12) mehrere Teilelemente (52) umfasst.

16. System nach einem der vorhergehenden Ansprüche, **dadurch gekennzeichnet, dass** am Schaft (12) die Absaughülse (20) drehfest angeordnet ist, wobei die Absaughülse (20) wenigstens eine radial rundum laufende Nute (34, 36) aufweist.

17. System nach einem der vorhergehenden Ansprüche, **dadurch gekennzeichnet, dass** am Absaugadapter (18) wenigstens ein elastischer Ring (46) sitzt.

18. System nach einem der vorhergehenden Ansprüche, **dadurch gekennzeichnet, dass** der Absaugadapter (18) die Durchgangsöffnung (40) der Absaughülse (20) abdeckt.

19. System nach einem der vorhergehenden Ansprüche, **dadurch gekennzeichnet, dass** die Absaughülse (20) in Richtung der Längsachse am bohrkopfseitigen Ende einen gekröpften Flansch (64) aufweist, wobei der gekröpfte Flansch (64) außenliegend auf dem Deckelement (24) sitzt und ein Abschnitt der Absaughülse (20) sich in den Kanalausgang (60) erstreckt.

20. System nach einem der vorhergehenden Ansprüche, **dadurch gekennzeichnet, dass** sich das einsteckende-seitige Ende der Absaughülse (20) über den Kanalausgang (60) zum Einsteckende (16) des Saugbohrers (10) hin erstreckt.

21. System nach einem der vorhergehenden Ansprüche, **dadurch gekennzeichnet, dass** die Absaughülse (20) zum Schaft (12) wenigstens eine Dichtung, insbesondere am gekröpften Flansch (64) nach einem der Ansprüche 19 oder 20, aufweist.
